# FASCICULE DE BREVET EUROPEEN

(11) **EP 2 795 281 B1**
(45) Date de publication et mention de la délivrance du brevet: **22.03.2017**
(21) Numéro de dépôt: 12808407.6
(22) Date de dépôt: 21.12.2012
(51) Int. Cl.: F16L 11/04, F16L 11/127, G01N 27/20, G01M 3/40, G01M 5/00

(54) **MÉTHODE DE SUIVI DE L'INTÉGRITÉ D'UNE LIGNE FLEXIBLE S'ÉTENDANT À TRAVERS UNE INSTALLATION D'EXPLOITATION DE FLUIDE, LIGNE FLEXIBLE, NÉCESSAIRE ET PROCÉDÉ DE FABRICATION ASSOCIÉS**
VERFAHREN ZUR ÜBERWACHUNG DER INTEGRITÄT EINER DURCH EINE FLUIDGEWINNUNGSANLAGE LAUFENDEN LEITUNG SOWIE ENTSPRECHENDE LEITUNG, KIT UND HERSTELLUNGSVERFAHREN DAFÜR
METHOD FOR MONITORING THE INTEGRITY OF A FLEXIBLE LINE EXTENDING THROUGH A FLUID EXPLOITATION FACILITY, AND ASSOCIATED FLEXIBLE LINE, KIT AND PRODUCTION PROCESS

(30) Priorité: 21.12.2011 FR 1162146
(43) Date de publication de la demande: 29.10.2014
(73) Titulaire: Technip France, 92400 Courbevoix (FR)
(72) Inventeur: DEMANZE, Frédéric, F-76490 Caudebec en Caux (FR)
(74) Mandataire: Lavoix
(86) Numéro de dépôt international: PCT/EP2012/076784
(87) Numéro de publication internationale: WO 2013/093068

(56) Documents cités:
- WO-A1-2011/027154
- US-A- 5 243 128

## Description

La présente invention concerne une méthode de suivi de l'intégrité d'une ligne flexible s'étendant à travers une installation d'exploitation de fluide, la ligne flexible comportant au moins un corps tubulaire en polymère. Une ligne flexible présentant des marqueurs conducteurs est connue du document US 5,243,128 A. Un autre exemple d'un procédé de suivi de l'intégrité d'une ligne flexible est décrit par le document WO 2011/027154 A1.

La ligne flexible est avantageusement une conduite flexible destinée au transport de fluide, notamment une conduite sous-marine apte à recevoir un fluide pétrolier pour transférer ce fluide depuis le fond d'une étendue d'eau vers la surface. Une telle conduite flexible est par exemple définie par la norme API 17J ou API RP 17B de l'American Petroleum Institute (API) et comprend généralement de l'intérieur vers l'extérieur, une carcasse, une gaine de pression, au moins une armure de résistance à la pression interne du fluide transporté, au moins une armure de résistance à la traction et une gaine externe de protection.

En variante, la ligne flexible est un ombilical destiné au transport d'un fluide de commande, d'une puissance électrique ou d'un signal d'information. Un tel ombilical est par exemple défini par la norme générale API 17E et API RP 171.

Dans les installations d'exploitation de fluide destinées à collecter des hydrocarbures dans le fond d'une étendue d'eau, il est connu de raccorder un ensemble de fond à une installation de surface à l'aide d'une ligne flexible telle que définie plus haut.

Pour raccorder la ligne sur la structure de surface, la ligne est immergée dans l'étendue d'eau, puis une extrémité amont de la ligne est remontée vers la structure de surface en vue de son raccordement.

Afin d'éviter que la ligne ne subisse des torsions ou des flexions trop importantes lors de cette installation ou lors de l'exploitation ultérieure de l'installation, la ligne flexible est engagée à travers un tube de guidage solidaire de la structure de surface. Ce tube est désigné par le terme anglais « I-Tube » ou « J-Tube » en fonction de sa forme.

Lors de la remontée de la ligne flexible à l'intérieur du tube, ou lors de son utilisation en service, il se produit parfois une abrasion extérieure de la gaine de protection de la ligne flexible. Cette abrasion est engendrée par exemple par le frottement entre la face externe de la gaine et la face interne du tube de protection.

Dans certains cas critiques, l'abrasion en surface peut engendrer des microfissures ou une perte d'intégrité de la gaine de protection, également appelée gaine externe. Dans ce cas, les éléments métalliques situés à l'intérieur de la gaine, et notamment les armures de traction, sont susceptibles de se corroder, ce qui peut avoir des conséquences importantes sur la tenue mécanique de la ligne flexible dans le temps. Il est donc nécessaire de pouvoir vérifier facilement l'intégrité mécanique d'une telle conduite, notamment après son introduction dans un tube de protection, car toute accessibilité à la conduite devient alors impossible. L'inspection visuelle est impossible pour la partie de la conduite située dans le tube de protection.

WO2009/070769 décrit une méthode de mesure dans laquelle un capteur optique, formé par une fibre optique est intégré dans la structure interne d'une conduite flexible.

Des mesures optiques réalisées sur la fibre optique permettent de déterminer si cette fibre se dégrade mécaniquement.

Une telle méthode est cependant compliquée et onéreuse à mettre en oeuvre, puisqu'elle nécessite un appareillage optique perfectionné.

Un but de l'invention est d'obtenir une méthode de suivi de l'intégrité d'une ligne flexible disposée à travers une installation d'exploitation de fluide, qui soit simple à mettre en oeuvre et peu onéreuse.

A cet effet, l'invention a pour objet une méthode selon la revendication 1.

La méthode selon l'invention peut comprendre l'une ou plusieurs des caractéristiques des revendications 2 à 9 et des caractéristiques suivantes, prise(s) isolément ou suivant toute combinaison techniquement possible :
- elle comporte la mise en contact d'un premier point de mesure situé sur l'un du premier capteur et du deuxième capteur avec une première borne d'un appareil de mesure d'une grandeur électrique, et la mise en contact d'un deuxième point de mesure situé sur l'un du premier capteur et du deuxième capteur avec une deuxième borne de l'appareil de mesure, l'appareil de mesure étant avantageusement un multimètre, la grandeur électrique étant notamment la conductivité ou la résistivité ;
- au moins une partie du premier capteur et du deuxième capteur est située dans le tube de protection ;
- la matrice en polymère du ou de chaque capteur est pleine sur toute la longueur du capteur.

L'invention a également pour objet une ligne flexible selon la revendication 10.

Une ligne flexible selon l'invention peut comprendre l'une ou plusieurs des caractéristiques des revendications 11 à 13, prises isolément ou suivant toute combinaison techniquement possible.

L'invention a également pour objet un nécessaire de mesure, selon la revendication 14.

L'invention a également pour objet une installation d'exploitation de fluide à travers une étendue d'eau, du type comprenant :
- un structure de surface ;
- un tube de protection, solidaire de la structure de surface ;
- une ligne flexible telle que définie plus haut, insérée à travers le tube ;
- un appareil de mesure d'une grandeur électrique destiné à être connecté à au moins un point de mesure situé sur le capteur filiforme, avantageusement destiné à être raccordé à un premier point de mesure situé sur un premier capteur filiforme et à un deuxième point de mesure situé sur un deuxième capteur filiforme.

L'invention a également pour objet un procédé de fabrication d'une ligne flexible selon la revendication 15.

Le procédé selon l'invention peut comprendre l'une ou plusieurs des caractéristiques des revendications 16 et 17, prise(s) isolément ou suivant toute combinaison techniquement possible.

L'invention sera mieux comprise à la lecture de la description qui va suivre, donnée uniquement à titre d'exemple, et faite en se référant aux dessins annexés, sur lesquels :
- la Figure 1 est une vue schématique en coupe partielle d'une première installation d'exploitation de fluide à travers une étendue d'eau, munie d'une ligne flexible selon l'invention ;
- la Figure 2 est une vue schématique partielle en perspective d'un exemple de ligne flexible selon l'invention ;
- la Figure 3 est une vue en perspective partielle d'un premier mode de réalisation d'une gaine instrumentée pour la ligne flexible selon l'invention ;
- la Figure 4 est une vue analogue à la Figure 3 d'un deuxième exemple de gaine instrumentée ;
- la Figure 5 est une vue d'une face d'une filière destinée à la réalisation de la gaine de la Figure 4 ;

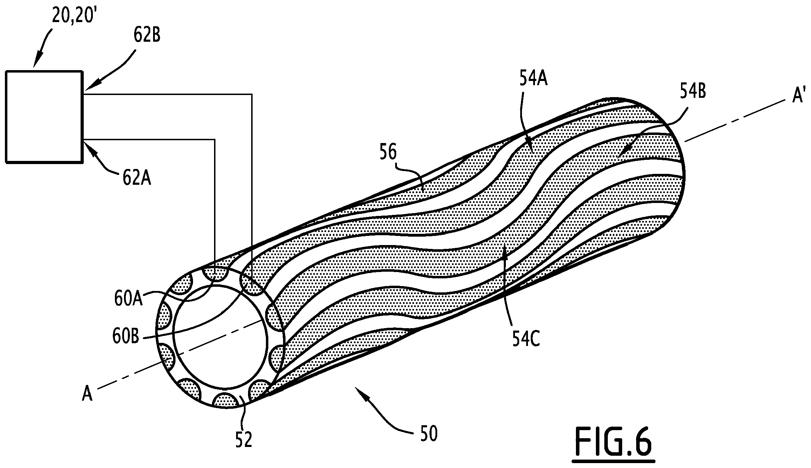

- la Figure 6 est une vue analogue à la Figure 3 d'un autre exemple de gaine flexible selon l'invention.

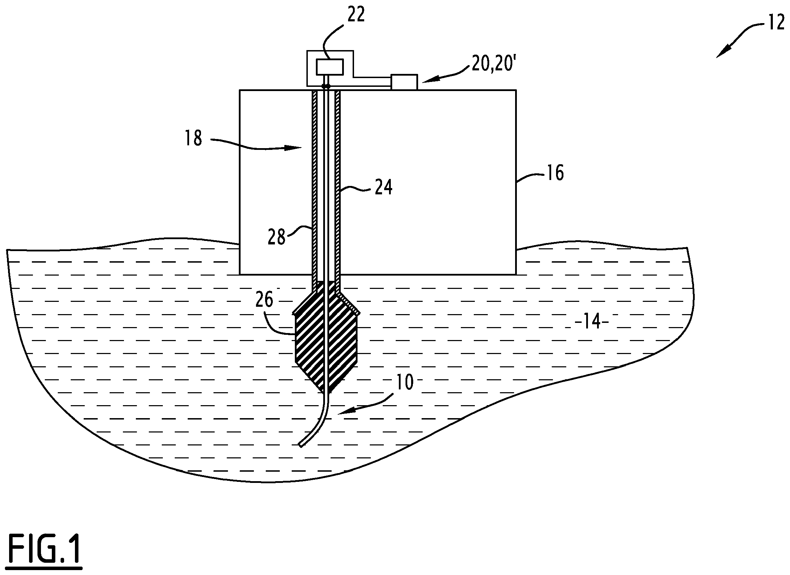

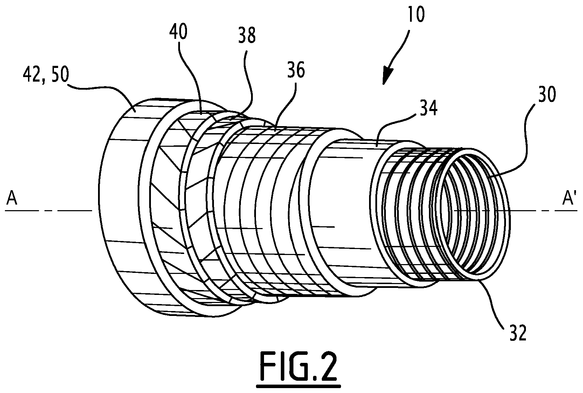

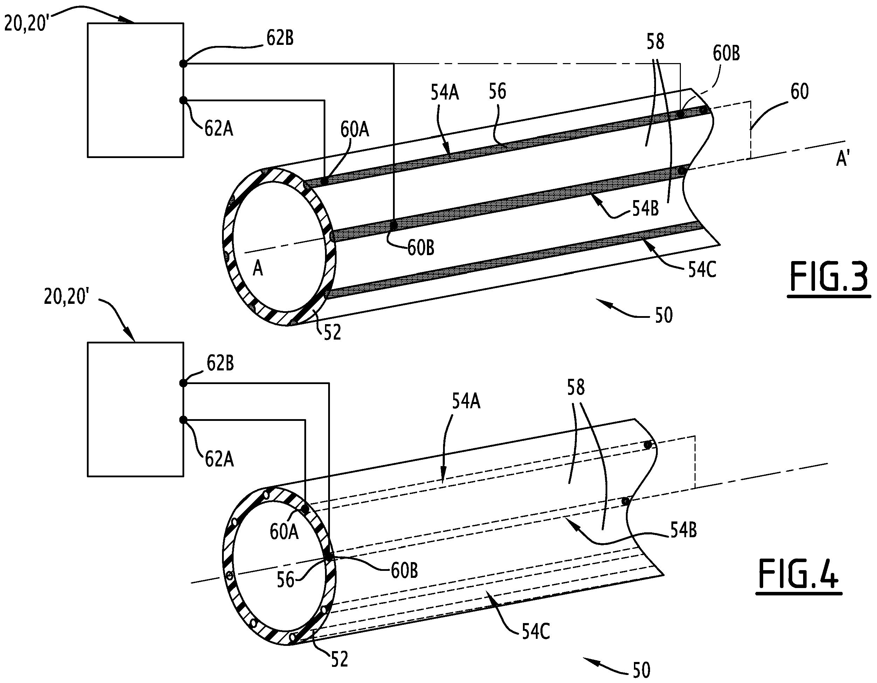

Une première ligne flexible 10, munie d'une gaine instrumentée partiellement conductrice selon l'invention est illustrée schématiquement par les Figures 2 et 3. Cette ligne flexible 10 est destinée à être utilisée dans une installation 12 d'exploitation de fluide à travers une étendue d'eau 14 représentée sur la Figure 1.

L'installation 12 est destinée par exemple à recueillir un fluide, notamment un hydrocarbure, prélevé dans le fond de l'étendue d'eau 14 et/ou à transférer cet hydrocarbure vers un navire de transport.

L'installation 12 comporte une structure de surface 16, un ensemble de fond (non représenté), situé sous la surface de l'étendue d'eau 14 et au moins une ligne flexible 10 raccordant l'ensemble de fond à la structure de surface 16.

L'installation 12 comporte en outre un dispositif 18 de guidage de la ligne flexible 10 sur la structure de surface 16 et un appareil de mesure 20 ; 20' d'une information représentative de l'intégrité de la ligne flexible 10.

L'étendue d'eau 14 est par exemple un lac, une mer ou un océan. La profondeur de l'étendue d'eau 14 au droit de la structure flottante 16 est par exemple comprise entre 15 mètres et 4000 mètres.

La structure de surface 16 est par exemple flottante. Elle est avantageusement formée par un support naval de surface, une plateforme semi-submersible, une colonne verticale flottante (de type SPAR), ou un navire par exemple de type FPSO (« Floating Production, Storage and Offloading »).

En variante, la structure de surface 16 est une structure rigide de type fixe de type « jacket » ou une structure oscillante assujettie au fond de la mer. Elle comporte au moins un connecteur 22 destiné à être raccordée à une extrémité aval de la ligne flexible 10.

Lorsque la ligne flexible 10 est une conduite de transport de fluide, le connecteur 22 est avantageusement un collecteur de type « manifold » pour recueillir le fluide circulant en travers la ligne flexible 10.

Le dispositif de guidage 18 comporte un tube rigide creux 24 solidaire de la structure 16 et un limiteur de courbure 26 monté autour de la ligne flexible 10 pour s'engager partiellement dans le tube rigide creux 24.

Dans l'exemple représenté sur la Figure 1, le tube 24 est un tube droit, de type « I-Tube ».

En variante (non représentée) le tube 24 est un tube qui présente une extrémité inférieure coudée, de type « J-Tube ».

Le tube 24 s'étend verticalement sur la structure 16. Il délimite une lumière interne 28 de passage de la ligne flexible 10. Il débouche vers le bas dans l'étendue d'eau 14 et débouche vers le haut, avantageusement au-dessus de la surface de l'étendue d'eau 14.

Lorsque la ligne flexible 10 est disposée à travers le tube 24, une partie supérieure du limiteur de courbure 26 est engagée à l'extrémité inférieure du tube 24 et obture vers le bas le tube 24.

Dans l'exemple représenté sur la Figure 2, la ligne flexible 10 est une conduite tubulaire flexible de transport de fluide délimitant intérieurement un passage central 30 de circulation de fluide. Cette conduite, aussi appelée « conduite montante » ou « riser » est notamment destinée à raccorder un réservoir de fluide sur le fond de l'étendue d'eau au connecteur 22 en surface. Cette conduite est par exemple telle que décrite dans les documents normatifs publiés par l'American Petroleum Institute (API), API 17J et API RP17B.

De manière classique, comme illustré par la figure 2, une telle conduite comporte avantageusement une carcasse interne 32 de reprise des efforts radiaux d'écrasement, une gaine interne 34 d'étanchéité en polymère, et une voûte de pression 36, pour la reprise des efforts radiaux générés par la pression du fluide transporté.

La conduite flexible comporte également une nappe interne 38 d'armures de traction, une nappe externe d'armures de traction 40 enroulée autour de la nappe interne 38 en sens opposé de la nappe interne 38 et une gaine extérieure 42 d'étanchéité en polymère.

Dans une variante, la conduite flexible est dépourvue de carcasse interne 30.

La carcasse 30 est par exemple formée à l'aide d'un feuillard métallique enroulé en hélice.

La voûte de pression 36 disposée autour de la gaine 34 est destinée à reprendre les efforts liés à la pression régnant à l'intérieur de la conduite. Elle est par exemple formée d'un fil métallique enroulé en hélice autour de la gaine qui présente généralement une géométrie complète notamment en forme de Z, de T, de U, de K, de X, ou de I.

Les nappes d'armures de traction 38, 40 sont par exemple formées par des fils métalliques enroulés.

La gaine interne 34, est destinée à confiner le fluide transporté dans la lumière 30.

La gaine externe 42 est destinée à empêcher la perméation de fluide depuis l'extérieur de la ligne flexible 10 vers l'intérieur et à protéger les armures de traction.

Dans une variante, la conduite flexible est dépourvue de voûte de pression 36. Elle comporte alors avantageusement une carcasse interne 30, une gaine interne 34, au moins deux nappes d'armures 38, 40 croisées, enroulées avec un angle compris entre 50° et 60° par rapport à un axe de la conduite et une gaine externe 42.

Une telle conduite flexible, dite « à structure équilibrée » est par exemple décrite dans FR 2 743 858 ou dans la norme API RP 17B, édition de Mars 2002, aux paragraphes § 4.3.2.1 page 8, et § 7.3.4.1.2 page 55.

Selon l'invention, la ligne flexible 10 comporte au moins une gaine instrumentée 50 telle que représentée sur la Figure 3 ou la Figure 4. Dans l'exemple de la Figure 2, au moins une des gaines 34, 42, en polymère, en particulier la gaine externe 42, est constituée d'une gaine instrumentée 50 selon l'invention.

Comme illustré par la Figure 3, la gaine instrumentée 50 comporte un corps tubulaire 52 en polymère électriquement isolant et une pluralité de capteurs électriquement conducteurs 54A, 54B, 54C s'étendant longitudinalement le long d'un axe A-A' de la gaine 50.

Dans l'exemple représenté, le corps 52 est réalisé à base d'un polymère isolant électriquement. Ce polymère est par exemple un polyoléfine, tel que du polyéthylène, un polyamide tel que du PA11 ou du PA12, ou un polymère fluoré tel que du polyfluorure de vinylidène (PVDF).

Le corps 52 présente généralement une épaisseur inférieure à 30 mm et notamment comprise entre 3 mm et 20 mm. Il présente généralement une longueur supérieure à 5 m.

La conductivité électrique du corps tubulaire 52 en polymère, prise dans sa masse, à l'écart des capteurs 54A à 54C, est inférieure à 10⁻⁸ S/cm, typiquement de l'ordre de 10⁻¹⁰ S/cm pour les polyoléfines tel que le polyéthylène et de l'ordre de 10⁻¹² S/cm pour les polyamides.

Les capteurs 54A à 54C sont chacun constitués par un élément longitudinal filiforme ou jonc 56. Dans l'exemple représenté sur la Figure 3, les joncs 56 sont disposés sur la surface externe du corps tubulaire 52.

La largeur des joncs 56 est inférieure à 20/1000 fois leur longueur. Cette largeur est par exemple inférieure à 20 mm.

Chaque capteur 54A à 54C présente une conductivité électrique supérieure à celle du corps tubulaire 52, notamment au moins 10 fois supérieure à celle du corps tubulaire 52, et de préférence au moins 100 fois à 1000 fois supérieure à celle du corps tubulaire.

Cette conductivité électrique est par exemple supérieure à 10⁻⁶ S/cm.

Chaque capteur 54A à 54C s'étend longitudinalement le long de la gaine 50 sur une longueur minimale comprise entre dix mètres et vingt mètres, préférentiellement quinze mètres. Dans un mode de réalisation, chaque capteur 54A à 54C est avantageusement parallèle à l'axe A-A' de la gaine 50.

La gaine 50 comporte au moins deux capteurs 54A, 54B, 54C espacés angulairement l'un de l'autre. Les capteurs sont par exemple raccordés entre eux à au moins une extrémité. Selon une variante de l'invention, les capteurs 54A à 54C sont espacés angulairement les uns des autres, mais ne sont pas nécessairement raccordés ensemble.

La gaine 50 présente ainsi, sur au moins une partie de sa longueur, au moins deux capteurs 54A, 54B, situés axialement en regard l'un de l'autre, notamment parallèlement l'un à l'autre.

Chaque capteur 54A, 54B est séparé du capteur 54B, 54A adjacent par un tronçon angulaire isolant 58 du corps tubulaire 52 propre à isoler électriquement les capteurs 54A, 54B entre eux.

Dans l'exemple représenté sur la Figure 3, la gaine 50 comprend une pluralité de capteurs 54A à 54C répartis angulairement autour de l'axe A-A' et séparés entre eux par des tronçons angulaires isolants 58 du corps tubulaire 52.

Avantageusement, les capteurs 54A à 54C de chaque paire de capteurs adjacents 54A à 54C sont espacés d'un angle de 30°, pris par rapport à un axe central de la ligne 10, pour une ligne flexible de diamètre intérieur égal à six pouces. Pour des lignes flexibles dont le diamètre intérieur est supérieur à six pouces, lesdits capteurs 54A à 54C sont espacés d'un angle compris entre 10° et 20°, préférentiellement de 15°.

Dans un mode de réalisation, les capteurs 54A, 54B sont groupés par paires. Les capteurs 54A, 54B de chaque paire sont raccordées électriquement l'un à l'autre, notamment à leurs extrémités axiales.

Ce raccordement électrique, symbolisé par la référence 60, est par exemple formé par un tronçon conducteur raccordant les extrémités axiales de deux capteurs 54A, 54B ou par un tronçon de capteur, de même nature que les capteurs 54A, 54B formant une liaison électrique entre les capteurs 54A, 54B.

Dans un premier mode de réalisation, chaque jonc 56 est formé par une matrice polymère contenant des charges électriquement conductrices. La matrice polymère est pleine ou dépourvue de cavité continue sur toute la longueur du jonc 56.

En particulier, la matrice polymère de chaque jonc 56 est réalisée à base d'un polymère électriquement isolant, en l'absence de charges. Cette matrice polymère est par exemple réalisée dans le même polymère que celui constituant le corps tubulaire 52.

Dans ce cas, les charges dispersées assurent la conductivité électrique globale du jonc 56. Ces charges sont par exemple des particules de noir de carbone, des nanotubes de carbone, du graphène, des particules métalliques.

Le pourcentage massique de charges dans la matrice polymère est généralement compris entre 0,5% en masse et 5% en masse.

Dans le cas où la matrice polymère du jonc 56 est de même nature que le polymère formant le corps 52, par exemple lorsque le corps 52 est en élastomère thermoplastique PP + EPDM et la matrice polymère du jonc 56 est en PP, aucun liant n'est nécessaire pour fixer entre eux le jonc 56 et le corps tubulaire 52.

En variante, un agent liant, tel que du polyéthylène greffé anhydride maléique est ajouté pour améliorer la compatibilité entre la matrice polymère du jonc 56 et le polymère formant le corps 52. Ceci, est le cas notamment si le corps 52 est fabriqué à partir de polyéthylène (PE) et que le jonc 56 est formé à partir de polyamide (PA). Cependant, l'agent liant dépend de la nature des polymères utilisés pour la mise en oeuvre du corps tubulaire 52 et du jonc 56. Dans le cas ou l'on aura le corps tubulaire 52 fabriqué à partir de polyéthylène (PE) le jonc 56 formé à partir de polypropylène (PP) on choisira par exemple, un agent liant dans la famille des terpolymères C2/C4 tel que la référence BORSEAL™, commercialisée par la société Boréalis.

Dans un deuxième mode de réalisation, le jonc 56 est réalisé à base d'un matériau polymère intrinsèquement conducteur. Ce matériau polymère est par exemple choisi parmi les polyacétylènes, les polyanilines, les polypyrroles ou les polythiophènes. Dans ce cas, la conductivité électrique du matériau polymère est par exemple supérieure à 10⁻⁴ S/cm. Un agent liant peut être utilisé pour améliorer la compatibilité entre la matrice polymère du jonc 56 et le polymère formant le corps 52.

Dans l'exemple représenté sur la Figure 3, chaque capteur 54A, 54B, 54C est disposé sur la face externe du corps tubulaire 52, avantageusement dans des rainures ménagées dans la face externe du corps tubulaire 52 pour recevoir les joncs 56.

Dans ce cas, chaque jonc 56 affleure avantageusement la face extérieure du corps 52 et est accessible en tout point de la gaine 50 le long de celle-ci.

Dans le mode de réalisation représenté sur la Figure 4, les joncs 56 sont noyés dans le corps tubulaire 52 et ne sont accessibles depuis l'extérieur qu'aux extrémités de la gaine 50.

Dans un mode de réalisation, l'appareil de mesure 20 est destiné à effectuer des mesures électriques entre deux points de la gaine 50, notamment entre deux points 60A, 60B situés sur deux capteurs 54A, 54B d'une paire de capteurs 54A, 54B raccordés électriquement l'un à l'autre.

L'appareil de mesure 20 est propre à mesurer la conductivité ou la résistivité entre deux bornes de mesure 62A, 62B destinées à être respectivement raccordées électriquement aux points 60A, 60B. L'appareil de mesure 20 est avantageusement un multimètre.

Cette conductivité électrique est par exemple mesurée à l'aide d'un appareil de mesure tel qu'un multimètre, par exemple un ohmmètre, par la méthode suivante qui consiste en l'application des fils reliés à l'appareil de mesure aux extrémités ou « bornes » accessibles de chacun des conducteurs 54A et 54B afin de vérifier s'il y a continuité électrique ou abrasion du corps tubulaire 52. Un matériau conducteur facilite le passage du courant, à l'inverse d'un matériau isolant qui lui ne laisse pas passer le courant. Par conséquent, si l'appareil de mesure indique une valeur de résistance faible, par exemple inférieure ou égale à la valeur de résistance nominale du capteur 54A, 54B, cela signifie que le corps tubulaire 52 est intègre. A l'inverse, si l'appareil de mesure indique une valeur de résistance élevée, par exemple strictement supérieure à la valeur de résistance nominale du capteur 54A, 54B, cela signifie qu'une abrasion partielle ou ou rupture totale d'au moins un desdits capteurs 54A et 54B s'est produite et donc que le corps 52 a subi une dégradation.

Dans un autre mode de réalisation, l'appareil de mesure 20' est destiné à effectuer des mesures de propagation d'un signal électrique sur chaque point 60A, 60B situé sur deux capteurs 54A, 54B raccordés ou non raccordés ensemble.

L'appareil de mesure 20' est propre à mesurer la continuité électrique (et indirectement la conductivité ou la résistivité) entre deux bornes de mesure 62A, 62B destinées à être respectivement raccordées électriquement aux points 60A, 60B. L'appareil de mesure 20' est avantageusement un réflectomètre temporel.

Dans ce cas, la continuité électrique (et indirectement la conductivité électrique) des capteurs 54A à 54C est mesurée par une méthode d'échométrie appelée réflectométrie temporelle (ou TDR pour Time Domain Reflectometry). Il est possible de détecter et localiser toutes discontinuités pouvant exister le long d'une ligne de transmission ou d'un câble électriquement conducteur.

A l'aide d'un appareil de mesure tel qu'un réflectomètre temporel que l'on a relié aux extrémités ou « bornes » de deux conducteurs (ici, les capteurs 54A, 54B) très proche l'un de l'autre, on envoie une impulsion électrique dans deux des capteurs 54A, 54B. L'onde se propage alors sur l'ensemble de la longueur desdits capteurs 54A, 54B. Si un signal réfléchi positif est réémis vers le réflectomètre, cela signifie que le signal émis a rencontré le corps tubulaire 52 formé par un matériau isolant électriquement, au niveau de l'extrémité desdits capteurs 54A, 54B et qu'il n'y a alors aucun défaut en présence sur cette zone dudit corps tubulaire 52. Cela revient à considérer un circuit électrique ouvert. A l'inverse, si un signal réfléchi négatif est réémis vers le réflectomètre, cela signifie qu'en un certain point d'un desdits capteurs 54A, 54B, il existe un défaut et par conséquent que le corps tubulaire 52 a subi une abrasion localisée. Cela revient à considérer qu'il y a « court-circuit ». Le temps mis par le signal réémis pour revenir au réflectomètre donne une information sur la position ou se situe le défaut le long des capteurs 54A, 54B et l'amplitude du signal réémis donne une information sur la nature du défaut rencontré.

Dans une variante, la mesure est effectuée en envoyant une impulsion éléctrique dans un seul capteur 54A à 54C.

Des exemples de techniques de mesure de continuité électrique sont donnés dans le fascicule IN-118-1 des Techniques de l'Ingénieur (daté de mai 2010), intitulé « Diagnostic filaire » ou dans la spécification HN 41-M-1 de la société Electricité de France, datée de juillet 1979.

Le corps tubulaire 52 est avantageusement fabriqué par extrusion. Dans un premier mode de réalisation de la gaine de la Figure 3, le jonc 56 est appliqué sur la face externe du corps tubulaire 52 par une méthode de co-extrusion dérivée. A cet effet, pour faciliter la mise en place des joncs 56, des rainures longitudinales sont avantageusement ménagées lors de l'extrusion du corps 52. Les joncs 56 sont formés par extrusion, et sont déposés sur la face extérieure du corps 52, par exemple dans les rainures.

Dans une variante, les joncs conducteurs 56 sont fabriqués avant le corps tubulaire 52, notamment par extrusion. Ils sont ensuite intégrés dans le polymère fluide destiné à former le corps 52 pour être fixés sur la face extérieure du corps tubulaire 52.

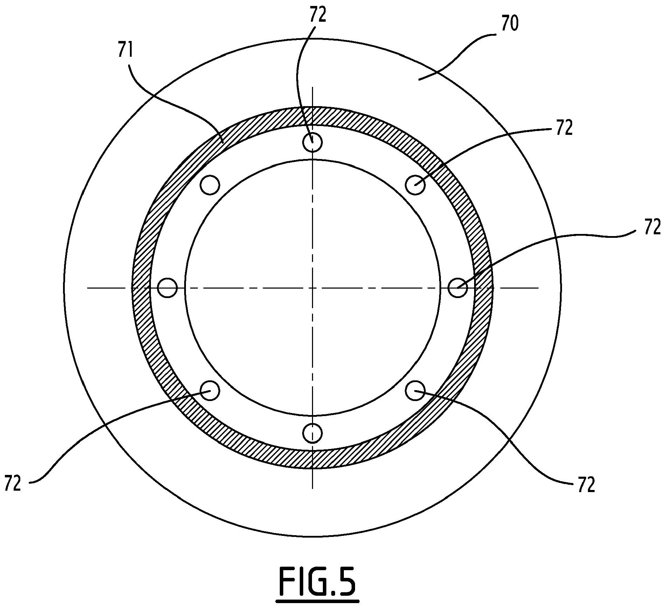

Pour réaliser la gaine selon la Figure 4, le corps 52 et les joncs 56 sont par exemple co-extrudés simultanément à l'aide d'une filière représentée schématiquement sur la Figure 5. Comme illustré sur la Figure 5, cette filière comporte un passage annulaire 71 destiné à former le corps 52 et une pluralité de conduits 72 d'injection des joncs 56 disposés dans le passage annulaire 70 pour amener le matériau fluide destiné à former les joncs 56.

Le polymère fluide destiné à former la gaine 52 est amené dans le passage annulaire 71. Le matériau polymère destiné à former les joncs 56, éventuellement contenant des charges, est amené à travers les conduits 72 pour être intégré dans le matériau polymère extrait à travers le passage annulaire 71.

Dans une variante, chaque jonc 56 est fabriqué séparément, avant l'extrusion du corps tubulaire 52. Chaque jonc 56 est ensuite intégré dans le corps tubulaire 52 lors de l'extrusion de ce dernier.

Une méthode de mesure de l'intégrité de la ligne flexible 10 disposée à travers l'installation 12 va maintenant être décrite.

Initialement, en référence à la Figue 1, la ligne flexible 10 a été remontée à travers le tube de guidage 24 depuis l'extrémité inférieure du tube 24 vers l'extrémité supérieure pour être raccordé au connecteur 22.

Lors de ce déplacement, et dans certains cas, la gaine 50 de la ligne 10 avantageusement sa gaine externe 42, risque de subir un phénomène d'abrasion et/ou d'usure prématurée, notamment par frottement entre la ligne 10 et le tube 24.

Ce phénomène peut apparaître lors du montage de la ligne flexible 10 dans l'installation 12, ou ultérieurement, lors de l'exploitation de fluide à travers l'installation 12.

Dans ce cas, lorsque la gaine 50 se dégrade, une usure, voire une rupture locale d'au moins un des capteurs 54A à 54C s'est produite.

Une première méthode de mesure d'intégrité selon l'invention comporte une première étape de raccordement électrique des bornes 62A, 62B de l'appareil électrique 20 respectivement à un premier point de mesure 60A sur un premier capteur 54A et à un deuxième point de mesure 60B sur un deuxième capteur 54B raccordé électriquement au premier capteur 54A.

Puis, une mesure de résistivité et/ou de conductivité entre les points 60A, 60B est effectuée par l'appareil de mesure 20.

Dans le cas où les capteurs 54A, 54B sont intacts, la conductivité est maximale, et la résistivité est minimale. Si une rupture de l'un des capteurs 54A, 54B s'est produite, la conductivité est minimale, et la résistivité est maximale.

Dans une première méthode de mesure, appliquée aux gaines 50 des Figures 3 et 4, la mesure est effectuée en raccordant les bornes 62A, 62B de l'appareil 20 aux extrémités respectives de deux capteurs 54A, 54B. Ce raccordement est par exemple effectué en surface sur des points de mesure 60A, 60B situés aux extrémités supérieures des capteurs 54A, 54B.

Dans une variante, applicable à la gaine 50 de la Figure 3, des mesures successives sont réalisées en raccordant électriquement aux bornes 62A, 62B de l'appareil de mesure 20 à des points de mesure 60A, 60B successifs situés sur la face extérieure de la gaine 50 au niveau des joncs 56 apparents sur cette face.

Les mesures successives peuvent être réalisées en diverses positions longitudinales le long de l'axe A-A' de la gaine 50, le long de sa partie se trouvant à l'air libre niveau de plateforme, par un personnel qualifié ou bien le long de sa partie immergée, à l'aide d'un véhicule téléguidé ou ROV (Remotely Operated Vehicle). Il est ainsi possible d'évaluer à quel niveau une rupture éventuelle d'un des capteurs 54A, 54B s'est produite.

Cette méthode est désignée par le terme « méthode pin ».

Une deuxième méthode de mesure d'intégrité selon l'invention comporte une première étape de raccordement électrique d'au moins une des bornes 62A, 62B de l'appareil de mesure 20' respectivement à un point de mesure 60A, 60B sur un capteur 54A, 54B.

Puis, on envoie une impulsion électrique afin d'effectuer une mesure de continuité/discontinuité électrique (résistivité et/ou de conductivité) entre les points 60A, 60B par l'appareil de mesure 20', comme expliqué plus haut.

Dans le cas où les capteurs 54A, 54B sont intacts, le signal réémis est identique au signal émis. Et, si une rupture de l'un des capteurs 54A, 54B s'est produite, le signal réémis est négatif et son amplitude varie selon la gravité de la rupture observée.

Dans une deuxième méthode de mesure, appliquée aux gaines 50 des Figures 3 et 5, la mesure est effectuée en raccordant les bornes 62A, 62B de l'appareil 20' aux extrémités respectives des capteurs 54A, 54B ou 54C. Ce raccordement est par exemple effectué en surface des points de mesure 60A, 60B ou 60C situés aux extrémités supérieures des capteurs 54A, 54B ou 54C.

La mesure d'intégrité est avantageusement mise en oeuvre après la mise en place de la ligne flexible 10 sur la structure 16, avant l'exploitation de la ligne flexible 10, ou encore ultérieurement lors de l'exploitation de la ligne flexible 10.

Dans une variante représentée en pointillés sur la Figure 3, les deux bornes 62A, 62B de l'appareil de mesure 20 sont raccordées à des points de mesure respectifs 60A, 60B espacés longitudinalement sur le même capteur 54A, 54B. Dans ce cas, les capteurs 54A, 54B voisins ne sont pas nécessairement reliés entre eux par une liaison 60.

Dans une autre variante, la gaine 50 présente un capteur 54A unique présentant avantageusement une longueur inférieure à 110% de la longueur de la gaine 50.

Dans d'autres variantes (non représentées), la ligne flexible 10 est un ombilical tel que défini par la norme API 17E et (API RP 171). Cet ombilical est destiné à transporter un fluide de commande hydraulique, une puissance électrique, ou un signal de transport d'information.

Dans une autre variante, la ligne flexible 10 est un faisceau de câbles électriques.

Dans les exemples précédents, les capteurs filiformes 54A à 54C sont placés dans l'une des gaines 34, 42. Plus généralement, les capteurs 54A à54C peuvent être placés dans toute gaine en polymère de la ligne flexible.

## Revendications

1. Méthode de suivi de l'intégrité d'une ligne flexible (10) s'étendant à travers une installation (12) d'exploitation de fluide, la ligne flexible (10) comprenant au moins une gaine (50) comportant un corps tubulaire (52) en polymère, **caractérisée en ce que** la méthode comprend les étapes suivantes :
- fourniture d'au moins un capteur filiforme (54A, 54B) au contact du corps tubulaire (52), le ou chaque capteur (54A, 54B) comportant une matrice en polymère présentant une conductivité électrique supérieure à celle du corps tubulaire (52),
- mesure d'une grandeur électrique représentative de l'intégrité du corps tubulaire (52), en au moins un point de mesure (60A, 60B) situé sur le capteur (54A).

2. Méthode selon la revendication 1, **caractérisée en ce que** la ligne flexible (10) est engagée à travers un tube (24) de protection présent dans l'installation (12) d'exploitation de fluide, notamment un tube vertical solidaire d'une structure de surface (16) de l'installation (12), au moins une partie du capteur (54A) étant disposée dans le tube de protection (24).

3. Méthode selon l'une quelconque des revendications précédentes, **caractérisée en ce que** le ou chaque capteur (54A, 54B) est noyé dans l'épaisseur du corps tubulaire (52) ou est fixé sur une face du corps tubulaire (52).

4. Méthode selon l'une quelconque des revendications précédentes, **caractérisée en ce que** le ou chaque capteur (54A, 54B) est réalisé à base d'une matrice en polymère intrinséquement conductrice, avantageusement à base d'un polymère choisi parmi les polyacétylènes, les polyanilines, les polypyrroles, et les polythiophènes.

5. Méthode selon l'une quelconque des revendications précédentes, **caractérisée en ce que** le ou chaque capteur (54A, 54B) est réalisé à base d'une matrice en polymère isolant chargé avec des particules conductrices, les particules électriquement conductrices étant choisies notamment parmi les particules de noir de carbone, les nanotubes de carbone, le graphène, les particules métalliques ou leurs mélanges.

6. Méthode selon l'une quelconque des revendications précédentes, **caractérisée en ce qu'**elle comporte la mise en contact d'un premier point de mesure (60A) situé sur le capteur (54A) avec une première borne (62A) d'un appareil de mesure (20) d'une grandeur électrique, et la mise en contact d'un deuxième point de mesure (60B) situé sur le capteur (54A) ou sur un capteur (54B) additionnel avec une deuxième borne (62B) de l'appareil de mesure (20), l'appareil de mesure (20) étant avantageusement un multimètre, la grandeur électrique étant notamment la conductivité ou la résistivité.

7. Méthode selon l'une quelconque des revendications précédentes, **caractérisée en ce qu'**elle comporte l'injection d'un signal électrique dans le capteur (54A, 54B) et la mesure d'un signal électrique s'étant propagé à travers le capteur (54A, 54B) en au moins un point de mesure (60A, 60B) pour déterminer la continuité électrique du capteur (54A, 54B).

8. Méthode selon l'une quelconque des revendications précédentes, **caractérisée en ce qu'**elle comporte la fourniture d'au moins un premier capteur filiforme (54A) et d'au moins un deuxième capteur filiforme (54B) au contact du corps tubulaire (52), chaque capteur (54A, 54B) comportant une matrice en polymère présentant une conductivité électrique supérieure à celle du corps tubulaire (52), le premier capteur (54A) et le deuxième capteur (54B) étant au moins en partie espacés angulairement l'un par rapport à l'autre par rapport à un axe (A-A') du corps tubulaire (52).

9. Méthode selon la revendication 8, **caractérisé en ce qu'**au moins un premier point aval du premier capteur (54A), avantageusement une extrémité du premier capteur (54A), est raccordé électriquement avec un deuxième point aval du deuxième capteur (54B), avantageusement une extrémité du deuxième capteur (54B), le ou chaque point de mesure (60A, 60B) étant situé respectivement à l'écart du premier point aval et à l'écart du deuxième point aval.

10. Ligne flexible (10) destinée à s'étendre à travers une installation (12) d'exploitation de fluide, la ligne flexible (10) comprenant au moins une gaine (50) comportant un corps tubulaire (52) en polymère,
**caractérisée en ce que** la gaine (50) comporte au moins un capteur filiforme (54A, 54B) au contact du corps tubulaire (52), chaque capteur (54A, 54B) comportant une matrice en polymère et présentant une conductivité électrique supérieure à celle du corps tubulaire (52), chaque capteur (54A, 54B) comprenant un point de mesure (60A, 60B), situé à l'extrémité du capteur (54A, 54B), le point de mesure (60A, 60B) étant propre à être raccordé à au moins une borne (62A, 62B) d'un appareil de mesure.

11. Ligne (10) selon la revendication 10, **caractérisée en ce que** le corps tubulaire (52) contient ou délimite un passage (30) de circulation de fluide.

12. Ligne (10) selon l'une quelconque des revendications 10 à 11, **caractérisée en ce que** le capteur (54A) est réalisé à base d'un polymère intrinsèquement conducteur, ou d'un polymère isolant chargé en particules conductrices.

13. Ligne (10) selon l'une quelconque des revendication 10 à 12, **caractérisée en ce qu'**elle comporte au moins un premier capteur filiforme (54A) et au moins un deuxième capteur filiforme (54B) au contact du corps tubulaire (52), le ou chaque capteur (54A, 54B) comportant une matrice en polymère et présentant une conductivité électrique supérieure à celle du corps tubulaire (52), le premier capteur (54A) et le deuxième capteur (54B) étant au moins en partie espacés angulairement l'un par rapport à l'autre par rapport à un axe (A-A') du corps tubulaire (52), le premier capteur (54A) et le deuxième capteur (54B) s'étendant avantageusement en regard l'un de l'autre, longitudinalement par rapport au corps tubulaire (52), notamment, parallèlement l'un à l'autre.

14. Nécessaire de mesure, **caractérisé en ce qu'**il comporte une ligne flexible (10) selon l'une quelconque des revendications 10 à 13, et un appareil (20, 20') de mesure d'une grandeur électrique en au moins un point de mesure (60A ; 60B) situé sur le capteur (54A, 54B), l'appareil de mesure (20, 20') étant avantageusement un appareil de mesure (20) destiné à mesurer une grandeur électrique entre deux points de mesure espacés l'un de l'autre ou un appareil de mesure d'un signal électrique (20') se propageant à travers le capteur (54A, 54B).

15. Procédé de fabrication d'une ligne flexible (10) selon l'une quelconque des revendications 10 à 13, comprenant les étapes suivantes :
- extrusion du corps tubulaire (52) en polymère ;
- disposition au contact du corps tubulaire (52) d'au moins un capteur filiforme (54A, 54B), le ou chaque capteur (54A, 54B) comportant une matrice en polymère et présentant une conductivité électrique supérieure à celle du corps tubulaire (52).

16. Procédé selon la revendication 15, **caractérisé en ce que** le ou chaque capteur (54A, 54B) est co-extrudé simultanément avec le corps tubulaire (52) pour être disposé dans l'épaisseur ou sur une face du corps tubulaire (52).

17. Procédé selon la revendication 15, **caractérisé en ce que** le ou chaque capteur (54A, 54B) est fabriqué avant l'extrusion du corps tubulaire (52), puis est disposé dans l'épaisseur ou sur une face du corps tubulaire (52) lors de l'extrusion du corps tubulaire (52).

## Patentansprüche

1. Verfahren zum Überwachen der Unversehrtheit einer durch eine Fluidgewinnungsanlage (12) laufenden, flexiblen Leitung (10), wobei die flexible Leitung (10) zumindest eine Hülle (50) mit einem rohrförmigen Körper (52) aus Polymer enthält, **dadurch gekennzeichnet, dass** das Verfahren die nachfolgenden Schritte umfasst:
- Bereitstellen zumindest eines drahtförmigen Sensors (54A, 54B) in Kontakt mit dem rohrförmigen Körper (52), wobei der bzw. jeder Sensor (54A, 54B) eine Polymermatrix enthält, die eine höhere elektrische Leitfähigkeit als der rohrförmige Körper (52) aufweist,
- Messen einer für die Unversehrtheit des rohrförmigen Körpers (52) repräsentativen, elektrischen Größe an zumindest einem Messpunkt (60A, 60B), der am Sensor (54A) liegt.

2. Verfahren nach Anspruch 1, **dadurch gekennzeichnet, dass** die flexible Leitung (10) durch ein Schutzrohr (24) führt, das in der Fluidgewinnungsanlage (12) vorhanden ist, insbesondere ein vertikal verlaufendes Rohr, das fest mit einer Flächenstruktur (16) der Anlage (12) verbunden ist, wobei zumindest ein Teil des Sensors (54A) in dem Schutzrohr (24) angeordnet ist.

3. Verfahren nach einem der vorangehenden Ansprüche, **dadurch gekennzeichnet, dass** der bzw. jeder Sensor (54A, 54B) in der Materialdicke des rohrförmigen Körpers (52) eingebettet oder an einer Seite des rohrförmigen Körpers (52) fixiert ist.

4. Verfahren nach einem der vorangehenden Ansprüche, **dadurch gekennzeichnet, dass** der bzw. jeder Sensor (54A, 54B) auf Basis einer an sich leitfähigen Polymermatrix hergestellt ist, vorteilhaft auf Basis von Polymer, das ausgewählt ist aus Polyacetylenen, Polyanilinen, Polypyrrolen und Polythiophenen.

5. Verfahren nach einem der vorangehenden Ansprüche, **dadurch gekennzeichnet, dass** der bzw. jeder Sensor (54A, 54B) auf Basis einer Matrix aus isolierendem Polymer hergestellt ist, das mit leitfähigen Partikeln beladen ist, wobei die elektrisch leitfähigen Partikel insbesondere ausgewählt sind aus Rußpartikeln, Kohlenstoffnanoröhrchen, Graphen, Metallpartikeln bzw. deren Gemische.

6. Verfahren nach einem der vorangehenden Ansprüche, **dadurch gekennzeichnet, dass** es das Inkontaktbringen eines an dem Sensor (54A) befindlichen ersten Messpunkts (60A) mit einer ersten Anschlussklemme (62A) eines Messgeräts (20) zum Messen einer elektrischen Größe und das Inkontaktbringen eines an dem Sensor (54A) oder an einem zusätzlichen Sensor (54B) befindlichen zweiten Messpunkts (60B) mit einer zweiten Anschlussklemme (62B) des Messgeräts (20) umfasst, wobei das Messgerät (20) vorteilhaft ein Multimeter ist und die elektrische Größe insbesondere die Leitfähigkeit bzw. der Widerstand ist.

7. Verfahren nach einem der vorangehenden Ansprüche, **dadurch gekennzeichnet, dass** es das Einleiten eines elektrischen Signals in den Sensor (54A, 54B) und das Messen eines durch den Sensor (54A, 54B) ausgebreiteten, elektrischen Signals an zumindest einem Messpunkt (60A, 60B) umfasst, um die elektrische Durchgängigkeit des Sensors (54A, 54B) zu ermitteln.

8. Verfahren nach einem der vorangehenden Ansprüche, **dadurch gekennzeichnet, dass** es das Bereitstellen von zumindest einem ersten drahtförmigen Sensor (54A) und von zumindest einem zweiten drahtförmigen Sensor (54B) in Kontakt mit dem rohrförmigen Körper (52) umfasst, wobei jeder Sensor (54A, 54B) eine Polymermatrix mit einer höheren elektrischen Leitfähigkeit als der rohrförmige Körper (52) aufweist, wobei der erste Sensor (54A) und der zweite Sensor (54B) zumindest teilweise winklig bezüglich einer Achse (A-A) des rohrförmigen Körpers (52) voneinander beabstandet sind.

9. Verfahren nach Anspruch 8, **dadurch gekennzeichnet, dass** zumindest ein dem ersten Sensor (54A) nachgelagerter, erster Punkt, vorteilhaft ein Ende des ersten Sensors (54A), elektrisch mit einem dem zweiten Sensor (54B) nachgelagerten, zweiten Punkt, vorteilhaft mit einem Ende des zweiten Sensors (54B), elektrisch verbunden ist, wobei der bzw. jeder Messpunkt (60A, 60B) jeweils im Abstand vom nachgelagerten ersten Punkt bzw. im Abstand vom nachgelagerten zweiten Punkt liegt.

10. Flexible Leitung (10), die dazu bestimmt ist, durch eine Fluidgewinnungsanlage (12) zu verlaufen, wobei die flexible Leitung (10) zumindest eine Hülle (50) mit einem rohrförmigen Körper (52) aus Polymer enthält,
**dadurch gekennzeichnet, dass** die Hülle (50) zumindest einen drahtförmigen Sensor (54A, 54B) in Kontakt mit dem rohrförmigen Körper (52) enthält, wobei jeder Sensor (54A, 54B) eine Polymermatrix enthält und eine höhere elektrische Leitfähigkeit als der rohrförmige Körper (52) aufweist, wobei jeder Sensor (54A, 54B) einen Messpunkt (60A, 60B) aufweist, der am Ende des Sensors (54A, 54B) liegt, wobei der Messpunkt (60A, 60B) in der Lage ist, mit zumindest einer Anschlussklemme (62A, 62B) eines Messgeräts verbunden zu werden.

11. Leitung (10) nach Anspruch 10, **dadurch gekennzeichnet, dass** der rohrförmige Körper (52) einen Durchgang (30) zum Durchströmen von Fluid enthält bzw. eingrenzt.

12. Leitung (10) nach einem der Ansprüche 10 bis 11, **dadurch gekennzeichnet, dass** der Sensor (54A) auf Basis eines an sich leitfähigen Polymers oder eines isolierenden Polymers besteht, das mit leitfähigen Partikeln beladen ist.

13. Leitung (10) nach einem der Ansprüche 10 bis 12, **dadurch gekennzeichnet, dass** sie zumindest einen drahtförmigen ersten Sensor (54A) und zumindest einen drahtförmigen zweiten Sensor (54B) in Kontakt mit dem rohrförmigen Körper (52) aufweist, wobei der bzw. jeder Sensor (54A, 54B) eine Polymermatrix enthält und eine höhere elektrische Leitfähigkeit als der rohrförmige Körper (52) aufweist, wobei der erste Sensor (54A) und der zweite Sensor (54B) zumindest teilweise winklig bezüglich einer Achse (A-A) des rohrförmigen Körpers (52) voneinander beabstandet sind, wobei der erste Sensor (54A) und der zweite Sensor (54B) vorteilhaft einander gegenüberliegend und longitudinal bezüglich des rohrförmigen Körpers (52), insbesondere parallel zueinander, verlaufen.

14. Mess-Set, **dadurch gekennzeichnet, dass** es eine flexible Leitung (10) nach einem der Ansprüche 10 bis 13 und ein Messgerät (20, 20') zum Messen einer elektrischen Größe an zumindest einem Messpunkt (60A; 60B) enthält, der an dem Sensor (54A, 54B) liegt, wobei das Messgerät (20, 20') vorteilhaft ein Messgerät (20) ist, das dazu bestimmt ist, eine elektrische Größe zwischen zwei voneinander beabstandeten Messpunkten zu messen, oder ein Messgerät zum Messen eines elektrischen Signals (20') ist, das sich durch den Sensor (54A, 54B) ausbreitet.

15. Verfahren zum Herstellen einer flexiblen Leitung (10) nach einem der Ansprüche 10 bis 13, umfassend die nachfolgenden Schritte:
- Extrusion des rohrförmigen Körpers (52) aus Polymer;
- Anordnen von zumindest einem drahtförmigen Sensor (54A, 54B) in Kontakt mit dem rohrförmigen Körper (52), wobei der bzw. jeder Sensor (54A, 54B) eine Polymermatrix enthält und eine höhere elektrische Leitfähigkeit als der rohrförmige Körper (52) aufweist.

16. Verfahren nach Anspruch 15, **dadurch gekennzeichnet, dass** der bzw. jeder Sensor (54A, 54B) gleichzeitig mit dem rohrförmigen Körper (52) koextrudiert wird, um in der Materialdicke oder an einer Seite des rohrförmigen Körpers (52) angeordnet zu werden.

17. Verfahren nach Anspruch 15, **dadurch gekennzeichnet, dass** der bzw. jeder Sensor (54A, 54B) vor der Extrusion des rohrförmigen Körpers (52) gefertigt wird und dann bei der Extrusion des rohrförmigen Körpers (52) in der Materialdicke oder an einer Seite des rohrförmigen Körpers (52) angeordnet wird.

## Claims

1. A method for monitoring the integrity of a flexible line (10) extending through a fluid exploiting facility (12), the flexible line (10) comprising at least one sheath (50) including a polymeric tubular body (52), **characterized in that** the method comprises the following steps:
- providing at least one wire sensor (54A, 54B) in contact with the tubular body (52), said or each sensor (54A, 54B) including a polymer matrix having greater electric conductivity than that of the tubular body (52),
- measuring an electric quantity representative of the integrity of the tubular body (52), in at least one measurement point (60A, 60B) located on the sensor (54A).

2. The method according to claim 1, **characterized in that** the flexible line (10) is engaged through a protective tube (24) present in the fluid exploiting facility (12), in particular a vertical tube secured to a surface structure (16) of the facility (12), at least one portion of the sensor (54A) being positioned in the protective tube (24).

3. The method according to any of the preceding claims, **characterized in that** said or each sensor (54A, 54B) is embedded in the thickness of the tubular body (52) or is attached onto one face of the tubular body (52).

4. The method according to any of the preceding claims, **characterized in that** said or each sensor (54A, 54B) is made on the basis of an intrinsically conductive polymeric matrix, advantageously based on a polymer selected from polyacetylenes, polyanilines, polypyrroles, and polythiophenes.

5. The method according to any of the preceding claims, **characterized in that** said or each sensor (54A, 54B) is made on the basis of an insulating polymer matrix filled with conductive particles, the electrically conducting particles being in particular selected from carbon black particles, carbon nanotubes, graphene, metal particles or mixtures thereof.

6. The method according to any of the preceding claims, **characterized in that** it includes the putting of a first measurement point (60A) located on the sensor (54A) into contact with a first terminal (62A) of an apparatus (20) for measuring an electric quantity, and the putting of a second measurement point (60B) located on the sensor (54A) or on an additional sensor (54B) into contact with a second terminal (62B) of the measurement apparatus (20), the measurement apparatus (20) being advantageously a multimeter, the electric quantity in particular being the conductivity or resistivity.

7. The method according to any of the preceding claims, **characterized in that** it includes the injection of an electric signal into the sensor (54A, 54B) and the measurement of an electric signal having propagated through the sensor (54A, 54B) in at least one measurement point (60A, 60B) for determining the electric continuity of the sensor (54A, 54B).

8. The method according to any of the preceding claims, **characterized in that** it includes the provision of at least one first wire sensor (54A) and of at least one second wire sensor (54B) in contact with the tubular body (52), each sensor (54A, 54B) including a polymeric matrix having greater electric conductivity than that of the tubular body (52), the first sensor (54A) and the second sensor (54B) being at least partly spaced apart angularly relatively to each other, relative to an axis (A-A') of the tubular body (52).

9. The method according to claim 8, **characterized in that** at least one first downstream point of the first sensor (54A), advantageously one end of the first sensor (54A), is electrically connected with a second downstream point of the second sensor (54B), advantageously one end of the second sensor (54B), said or each measurement point (60A, 60B) being respectively located away from the first downstream point and away from the second downstream point.

10. A flexible line (10) intended to extend through a fluid exploiting facility (12), the flexible line (10) comprising at least one sheath (50) including a polymeric tubular body (52),
**characterized in that** the sheath (50) includes at least one wire sensor (54A, 54B) in contact with the tubular body (52), each sensor (54A, 54B) including a polymeric matrix and having greater electric conductivity than that of the tubular body (52), each sensor (54A, 54B) comprising a measurement point (60A, 60B) located at the end of the sensor (54A, 54B), the measurement point (60A, 60B) being intended to be electrically connected to at least one measurement terminal (62A, 62B) of a measurement apparatus.

11. The line (10) according to claim 10, **characterized in that** the tubular body (52) contains or delimits a passage (30) for circulation of fluid.

12. The line (10) according to any of claims 10 to 11, **characterized in that** the sensor (54A) is made on the basis of an intrinsically conductive polymer, or of an insulating polymer filled with conductive particles.

13. The line (10) according to any of claims 10 to 12, **characterized in that** it includes at least one first wire sensor (54A) and at least one second wire sensor (54B) in contact with the tubular body (52), said or each sensor (54A, 54B) including a polymeric matrix and having greater electric conductivity than that of the tubular body (52), the first sensor (54A) and the second sensor (54B) being at least partly spaced apart angularly relatively to each other, relative to an axis (A-A') of the tubular body (52), the first sensor (54A) and the second sensor (54B) advantageously extending facing each other, longitudinally relative to the tubular body (52), in particular parallel to each other.

14. A measurement kit, **characterized in that** it includes a flexible line (10) according to any of claims 10 to 13, and an apparatus (20, 20') for measuring an electric quantity in at least one measurement point (60A ; 60B) located on the sensor (54A, 54B), the measurement apparatus (20, 20') being advantageously a measurement apparatus (20) intended to measure an electric quantity between measurement points spaced apart from each other or an apparatus (20') for measuring an electric signal propagating through the sensor (54A, 54B).

15. A method for manufacturing a flexible line (10) according to any of claims 10 to 13, comprising the following steps:
- extruding the polymeric tubular body (52);
- positioning in contact with the tubular body (52) at least one wire sensor (54A, 54B), said or each sensor (54A, 54B) including a polymeric matrix and having greater electric conductivity than that of the tubular body (52).

16. The method according to claim 15, **characterized in that** said or each sensor (54A, 54B) is co-extruded with the tubular body (52) simultaneously so as to be positioned in the thickness or on one face of the tubular body (52).

17. The method according to claim 15, **characterized in that** the said or each sensor (54A, 54B) is made before extruding the tubular body (52), and is then positioned in the thickness or on one face of the tubular body (52) upon extruding the tubular body (52).
